# EUROPEAN PATENT SPECIFICATION

(11) **EP 0 818 043 B1**
(45) Date of publication and mention of the grant of the patent: **07.07.1999**
(21) Application number: 96908405.2
(22) Date of filing: 21.02.1996
(51) Int. Cl.: G21C 3/04, G21C 3/18

(54) **FUEL ASSEMBLY FOR A BOILING WATER REACTOR WITH TAPERING FUEL RODS**
KERNBRENNSTABBÜNDEL FÜR SIEDEWASSERREAKTOR MIT KONISCHEN BRENNSTÄBEN
ASSEMBLAGE COMBUSTIBLE A BARRES COMBUSTIBLES EFFILEES, POUR REACTEUR A EAU BOUILLANTE

(30) Priority: 22.03.1995 SE 9500914
(43) Date of publication of application: 14.01.1998
(73) Proprietor: ABB ATOM AB, 721 63 Västeras (SE)
(72) Inventor: ALBERTSSON, Margrit, S-722 31 Västeras (SE); GRÖNLUND, Magnus, S-723 44 Väster s (SE)
(74) Representative: Dahlstrand, Björn
(86) International application number: SE9600233
(87) International publication number: WO9629706

(56) References cited:
- EP-A- 0 403 955
- EP-A- 0 514 121
- DE-A- 1 614 950

## Description

### TECHNICAL FIELD

The present invention relates to a fuel assembly for a boiling water reactor. The fuel assembly comprises a fuel rod which comprises a lower column of fuel pellets with a relatively larger diameter, and an upper column of fuel pellets with a relatively smaller diameter. The fuel rod further comprises a cladding tube which comprises a lower relatively wider part which surrounds the lower column of fuel pellets, and an upper relatively narrower part which surrounds the upper column of fuel pellets. A transition portion is arranged between the lower and upper parts. A spring is arranged at the upper end of the fuel rod, and a spacing member is arranged between the lower and upper columns of fuel pellets.

### BACKGROUND ART

The advantage of a fuel assembly in which at least certain fuel rods are tapering, that is, they have a larger rod diameter in their lower part than in their upper part, compared with conventional fuel rods, that is, fuel rods which have the same rod diameter along the whole of their axial extent, is that the fuel-to-moderator ratio in the axial direction becomes more uniform. The high proportion of steam and hence the low volume of water in the upper part of the core are compensated by the smaller quantity of uranium in the upper part of the fuel rods. An improved fuel-to-moderator ratio leads to an increased reactivity during operation, which gives improved fuel economy, and to an improved shutdown margin, which results in increased safety. An additional advantage achieved with tapering fuel rods is a reduced pressure drop in the upper two-phase region of the fuel assembly, which improves the ratio between the pressure drops in the lower single-phase region of the fuel assembly and the upper two-phase region of the fuel assembly. This improved pressure ratio means that the fuel is given improved stability properties during operation.

During operation, the size of the fuel pellets varies. At the beginning of the operating cycle, the density of the pellets increases, which means that they shrink in size. When the pellets are subjected to neutron irradiation, they grow in size because they absorb neutrons, which leads to the formation of gaseous fission products which are accumulated in the pellets. The size of the pellets also depends on the temperature thereof. Also the cladding tubes grow when they are subjected to neutron irradiation and their size varies with the temperature. When designing a fuel rod comprising two columns of pellets with different diameters, it is necessary to give these a possibility of growing and shrinking in relation to the cladding tube, both axially and radially. If the pellets in the lower column grow in relation to the cladding tube and if there is not sufficient space, the top pellet in the column will be pressed against the upper part of the cladding tube and give rise to stresses in the cladding tube. If, instead, the lower column of pellets shrinks in relation to the cladding tube, pellets from the upper column may fall down into the lower part of the cladding tube and be positioned crosswise. If the smaller pellets fall down in the lower wider part, the distance from these pellets to the wall of the cladding tube becomes so large that the heat transfer from the pellets is deteriorated.

Patent application EP-0 514 121 A1 discloses a fuel assembly for a boiling water reactor which comprises the characteristic features described in the introduction. The upper and lower columns of pellets are pressed against each other, or against a reducer provided between the columns of pellets, by an upper and a lower spring. The upper spring is arranged in a space in the upper part of the cladding tube and takes up movements in the upper column of pellets. The lower spring is arranged in a space in the lower part of the cladding tube and takes up movements in the lower column of pellets. In one embodiment the reducer is to a limited extent movable in the axial direction of the cladding tube.

During the burnup of the nuclear fuel, fission gases, which are contained within the fuel rod, are released. To prevent the pressure on the cladding from becoming too large, an expansion space is needed for the fission gases. In conventional fuel rods there is a fission gas space in the upper part of the fuel rod. The fuel rod described in the above-mentioned EP application has two fission gas spaces, one in the upper and one in the lower part of the rod.

Current boiling water reactors are designed for fuel rods with a certain height of the uranium column and with the fission gas space in the upper part thereof. Therefore, there are physical limitations to the height of the uranium column in the fuel rod. Such limitations are, for example, the range of the control rods and the location of the core grid. If a fission gas space is located in the lower part of the fuel rod, the uranium column must decrease in size corresponding to the size of the fission gas space. From the point of view of fuel economy, therefore, it is more advantageous to locate the fission gas space in the upper part of the fuel rod.

A disadvantage with the fuel rod described above is that the uranium column loses in height because the fuel rod has a fission gas space in the lower part of the fuel rod, which leads to deteriorated fuel economy. Also in case of the reducer being movable to a limited extent the need for the lower fission gas space is indispensable.

### OBJECT OF THE INVENTION

The invention aims to provide a fuel assembly of the kind described in the introductory part of the description, which in a simple way absorbs the above-mentioned pellet movements without any limitations as to the height of the uranium column and with retained fuel economy.

What characterizes a fuel assembly according to the invention is set out in claims 1 and 5.

### BRIEF DESCRIPTION OF THE DRAWINGS

Figure 1 schematically shows a fuel assembly according to the invention.

Figure 2 shows a fuel rod according to a first embodiment of the invention.

Figures 3 shows part of a fuel rod according to a second embodiment of the invention.

### DESCRIPTION OF THE PREFERRED EMBODIMENTS

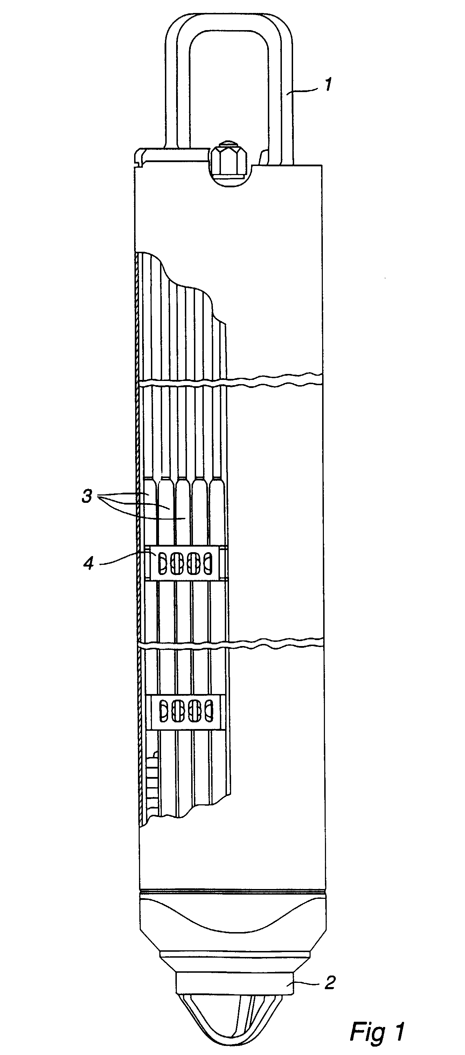

Figure 1 schematically shows a fuel assembly according to the invention. The fuel assembly comprises an upper handle 1, an inlet part 2, a plurality of fuel rods 3 and a number of axially distributed spacers 4, which retain the spaced relationship of the fuel rods. At the top the fuel rods are retained by a top tie plate (not shown) and at the bottom by a bottom tie plate (not shown). The shown fuel rods have two different diameters, a smaller diameter in the upper part of the fuel rod and a larger diameter in the lower part of the fuel rod.

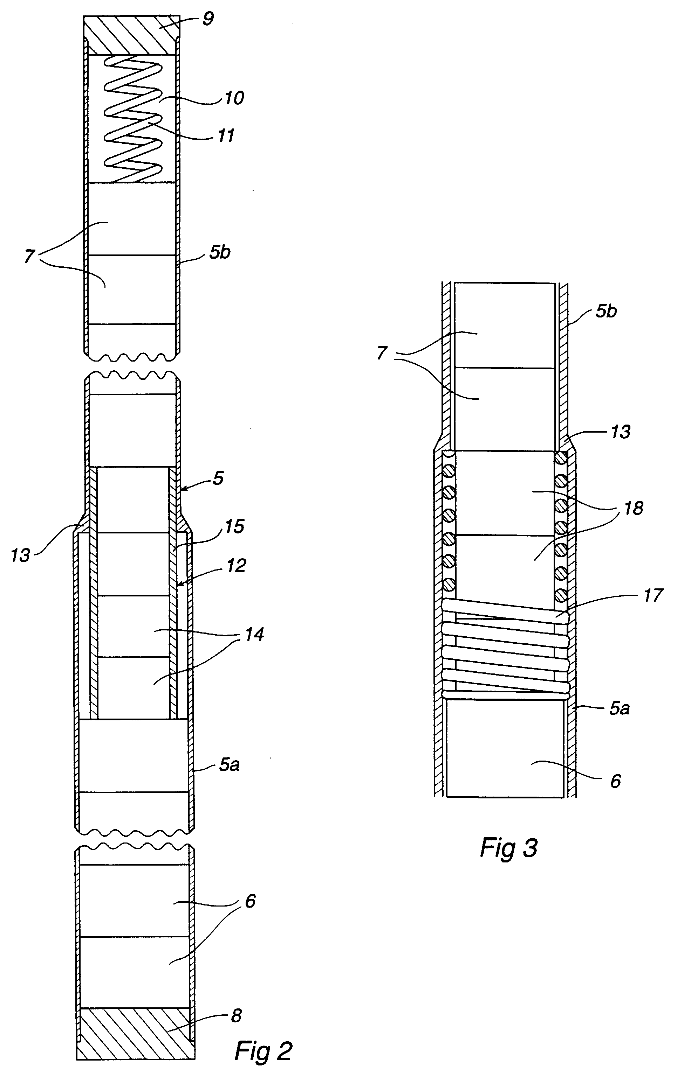

Figure 2 shows a fuel rod according to a first embodiment of the invention. The fuel rod comprises a cladding tube 5 which consists of a lower part 5a with a larger diameter and an upper part 5b with a smaller diameter, and a transition portion 13 between the lower and upper parts of the cladding tube. The upper and lower parts are joined together by means of a weld joint. The lower part of the cladding tube surrounds a lower column of fuel pellets 6 with a larger diameter. The upper part of the cladding tube surrounds an upper column of fuel pellets 7 with a smaller diameter. The lower part of the cladding tube is sealed by means of a bottom plug 8, and the upper part is sealed by means of a top plug 9.

Between the upper and lower pellet columns, a spacing member 12 is arranged. The spacing member comprises a third column with fuel pellets 14 with a diameter which is smaller than the diameter of the pellets 7 in the upper pellet column and a tube 15 which surrounds the third column of fuel pellets 14. The tube 15 has a diameter corresponding to the diameter of the upper pellet column and is made of a material with a low neutron absorption, for example Zr or Ti or various alloys thereof. The spacing member 12 is arranged at the transition portion 13 between the lower and upper parts of the cladding tube in such a way that it extends both into the upper narrower part 5b and into the lower wider part 5a of the cladding tube. The spacing member 12 is movably arranged in the longitudinal direction.

Between the upper pellets column and the top plug there is a fission gas space 10. The fission gas space houses a helical spring 11, the task of which is to take up movements in the pellet columns as well as to press the upper pellet column against the spacing member, which in turn presses the lower pellet column against the bottom plug. The spacing member permits the lower pellet column to grow in relation to the cladding tube without any risk that the uppermost pellet in the column is pressed against the upper part of the cladding tube and gives risk to stresses in the cladding tube, and permits the lower pellet column to shrink in relation to the cladding tube without any risk of pellets from the upper column falling down into the lower part of the cladding tube. Figures 3 shows a second embodiment of the invention, wherein the spacing member comprises a helical spring 17 an a number of fuel pellets 18 surrounded by the helical spring. The helical spring is arranged in the lower part of the cladding tube 5a with its upper end at the transition portion 13. The pellets 18 which are surrounded by the spring have the same diameter as the pellets 7 in the upper column. When the lower pellet column grows, the helical spring 17 is compressed and the pellets 18 are pushed upwards and into the upper part of the cladding tube. When the lower pellet column shrinks, pellets 7 from the upper pellet column are pressed down into the lower part of the cladding tube and are surrounded by the helical spring 17. The helical spring 17 has two important functions, namely, to prevent the narrower pellets which are pressed down in the wider part of the cladding tube from being obliquely positioned, and to improve the heat transfer from these pellets to the cladding tube. The helical spring 17 in this example consists of spring wire with a circular cross section. The helical spring 17 may advantageously consist of a spring wire with a rectangular cross section to further improve the heat transfer.

In spite of these different measures to maintain a good heat transfer between the pellets and the cladding tube, it may, however, be locally deteriorated. It is part of known technique to fill the fuel rod with He to a certain pressure, at the end of the manufacture, in order to maintain a good heat transfer between the pellet and the cladding. The invention may advantageously be supplemented with this technique.

In the above embodiments, fuel rods with one diameter transition have been shown. The invention may, of course, also be applied to fuel rods with several diameter transitions.

In the above embodiments, the upper and lower parts are joined by a weld joint. Another way of joining them is to provide them with a tap and a thread and screw them together. It is also possible to manufacture the whole cladding tube in one single piece, for example by rolling it into the final design during manufacture. The transition between the lower and upper parts of the cladding tube may be distinctive as in this example, or successively tapering.

The lower column of pellets need not, of course, rest directly on the bottom plug, as shown in these examples, but there may, for example, be a washer between the bottom plug and the lowermost pellet.

## Claims

1. A fuel assembly for a boiling water reactor comprising a fuel rod which comprises a lower column of fuel pellets (6) with a relatively larger diameter, an upper column of fuel pellets (7) with a relatively smaller diameter, a cladding tube (5) comprising a lower relatively wider part (5a) which surrounds the lower column of fuel pellets, an upper relatively narrower part (5b) which surrounds the upper column of fuel pellets, and a transition portion (13) between the lower and upper parts, wherein a spring (11) is arranged at the upper end of the fuel rod, and a spacing member (12), which is movable in the longitudinal direction of the cladding tube (5), is arranged between the lower and upper columns of fuel pellets (6, 7), **characterized** in that at least a part of the spacing member (12) is fixedly arranged in the transition portion (13), and extending into the lower part (5a) and the spring (11) provides a compressive force on the lower column via the spacing member.

2. A fuel assembly according to claim 1, **characterized** in that the spacing member comprises a helical spring (17) and a number of fuel pellets (18) surrounded by the helical spring.

3. A fuel assembly according to claim 2, **characterized** in that the fuel pellets (18) surrounded by the helical spring have the same diameter as the fuel pellets in the upper column and the helical spring (17) is fixed in the transition portion (13).

4. A fuel assembly according to claim 2 or 3, **characterized** in that the helical spring (17) is formed of a spring wire having a substantially rectangular cross section.

5. A fuel assembly for a boiling water reactor comprising a fuel rod which comprises a lower column of fuel pellets (6) with a relatively larger diameter, an upper column of fuel pellets (7) with a relatively smaller diameter, a cladding tube (5) comprising a lower relatively wider part (5a) which surrounds the lower column of fuel pellets, an upper relatively narrower part (5b) which surrounds the upper column of fuel pellets, and a transition portion (13) between the lower and upper parts (5a, 5b), whereby a spring (11) is arranged at the upper end of the fuel rod, and a spacing member (12), which is movable in the longitudinal direction of the cladding tube (5), is arranged between the lower and upper columns of fuel pellets (6, 7), **characterized** in that the spacing member is arranged surrounded by the transition portion (13), and extending both into the lower and into the upper part (5a, 5b), and the spring (11) provides a compressive force on the lower column via the spacing member.

6. A fuel assembly according to claim 5, **characterized** in that the spacing member (12) comprises a tube (15) with a diameter corresponding to the diameter of the upper pellet column (7) and a number of fuel pellets (14) surrounded by the tube.

## Patentansprüche

1. Brennstoffvorrichtung für einen Siedewasserreaktor mit einem Brennstab, der einen unteren Stapel mit Brennstoffpellets (6) mit verhältnismäßig großem Durchmesser, einen oberen Stapel mit Brennstoffpellets (7) mit verhältnismäßig kleinem Durchmesser, ein Mantelrohr (5) mit einem verhältnismäßig breiterem unteren Bereich (5a), der den unteren Stapel mit Brennstoffpellets umschließt, einen verhältnismäßig schmaleren oberen Bereich (5b), der den oberen Stapel mit Brennstoffpellets umschließt, und einen Übergangsbereich (13) zwischen unterem und oberem Bereich, wobei eine Feder (11) am oberen Ende des Brennstabes vorgesehen ist, und ein Distanzhalter (12), der in der Längsrichtung des Mantelrohres (5) beweglich ist, zwischen dem oberen und unterem Stapel mit Brennstoffpellets (6, 7) angeordnet ist, **dadurch gekennzeichnet,** daß mindestens ein Bereich des Distanzhalteres (12) fest im Übergangsbereich (13) angeordnet ist und in den unteren Bereich (5a) hinein verläuft und daß die Feder (11) über den Distanzhalter eine Druckkraft auf den unteren Stapel erzeugt.

2. Brennstoffvorrichtung gemäß Patentanspruch 1, **dadurch gekennzeichnet,** daß der Distanzhalter eine Schraubenfeder (17) und eine Anzahl von der Schraubenfeder umschlossene Brennstoffpellets (18) umfaßt.

3. Brennstoffvorrichtung gemäß Patentanspruch 2, **dadurch gekennzeichnet,** daß die von der Schraubenfeder umschlossenen Brennstoffpellets (18) denselben Durchmesser aufweisen wie die Brennstoffpellets im oberen Stapel, und daß die Schraubenfeder (17) im Übergangsbereich (13) befestigt ist.

4. Brennstoffvorrichtung gemäß Patentanspruch 2 oder 3, **dadurch gekennzeichnet,** daß die Schraubenfeder (17) aus einem Federdraht mit im wesentlichen rechteckigem Querschnitt besteht.

5. Brennstoffvorrichtung für einen Siedewasserreaktor mit einem Brennstab, der einen unteren Stapel mit Brennstoffpellets (6) mit verhältnismäßig großem Durchmesser, einen oberen Stapel mit Brennstoffpellets (7) mit verhältnismäßig kleinem Durchmesser, ein Mantelrohr (5) mit einem verhältnismäßig breiteren unteren Bereich (5a), der den unteren Stapel mit Brennstoffpellets umschließt, einen verhältnismäßig schmaleren oberen Bereich (5b), der den oberen Stapel mit Brennstoffpellets umschließt und einen Übergangsbereich (13) zwischen dem unteren und dem oberen Bereich (5a, 5b), wobei eine Feder (11) am oberen Ende des Brennstabes vorgesehen ist und ein Distanzhalter (12), der in der Längsrichtung des Mantelrohres (5) beweglich ist, zwischen dem oberen und unterem Stapel mit Brennstoffpellets (6, 7) angeordnet ist, **dadurch gekennzeichnet,** daß der Distanzhalter vom Übergangsbereich (13) umschlossen wird und sowohl in den unteren Bereich wie in den oberen Bereich (5a, 5b) ragt und die Feder (11) über den Distanzhalter eine Druckkraft auf den unteren Stapel erzeugt.

6. Brennstoffvorrichtung gemäß Patentanspruch 5, **dadurch gekennzeichnet,** daß der Distanzhalter (12) ein Rohr (15) mit einem dem Durchmesser des oberen Pelletsstapels entsprechenden Durchmesser und eine Anzahl von dem Rohr umschlossene Brennstoffpellets (14) umfaßt.

## Revendications

1. Assemblage combustible pour un réacteur à eau bouillante comportant un crayon combustible qui comporte une colonne inférieure de pastilles (6) de combustible ayant un diamètre relativement plus grand, une colonne supérieure de pastilles (7) combustibles ayant un diamètre relativement plus petit, un tube (5) formant gaine comprenant une partie (5a) inférieure relativement plus large qui entoure la colonne inférieure de pastilles de combustible, une partie (5b) supérieure relativement plus étroite qui entoure la colonne supérieure de pastilles de combustible, et une partie (13) de transition entre les parties inférieure et supérieure, dans lequel un ressort (11) est disposé à l'extrémité supérieure du crayon combustible, et un élément (12) d'espacement, qui est mobile suivant la direction longitudinale du tube (5) formant gaine, est disposé entre les colonnes inférieure et supérieure des pastilles (6, 7) de combustible, caractérisé en ce que au moins une partie de l'élément (12) d'espacement est disposée de manière fixe dans la partie (13) de transition, et en s'étendant dans la partie (5a) inférieure, et le ressort (11) assure une force en compression sur la colonne inférieure par l'intermédiaire de l'élément d'espacement.

2. Assemblage combustible suivant la revendication 1, caractérisé en ce que l'élément d'espacement comprend un ressort (17) hélicoïdal et un certain nombre de pastilles (18) de combustible entourées par le ressort hélicoïdal.

3. Assemblage combustible suivant la revendication 2, caractérisé en ce que les pastilles (18) de combustible entourées par le ressort hélicoïdal ont le même diamètre que les pastilles de combustible dans la colonne supérieure et le ressort (17) hélicoïdal est fixé dans la partie (13) de transition.

4. Assemblage combustible suivant la revendication 2 ou 3, caractérisé en ce que le ressort (17) hélicoïdal est formé d'un fil de ressort ayant une section transversale sensiblement rectangulaire.

5. Assemblage combustible pour un réacteur à eau bouillante comportant un crayon combustible qui comprend une colonne inférieure de pastilles (6) de combustible ayant un diamètre relativement plus grand, une colonne supérieure de pastilles (7) de combustible ayant un diamètre relativement plus petit, un tube (5) formant gaine comprenant une partie (5a) inférieure relativement plus large qui entoure la colonne inférieure de pastilles de combustible, une partie (5b) supérieure relativement plus étroite qui entoure la colonne supérieure de pastilles de combustible, et une partie (13) de transition entre les parties (5a, 5b) inférieure et supérieure, un ressort (11) étant disposé à l'extrémité supérieure du crayon combustible, et un élément (12) d'espacement, qui est mobile suivant la direction longitudinale du tube (5) formant gaine, est disposé entre les colonnes inférieure et supérieure des pastilles (6, 7) de combustible, caractérisé en ce que l'élément d'espacement est disposé de manière à être entouré par la partie (13) de transition, et en s'étendant à la fois dans la partie inférieure et dans la partie supérieure (5a, 5b), et le ressort (11) assure une force en compression sur la colonne inférieure par l'intermédiaire de l'élément d'espacement.

6. Assemblage combustible suivant la revendication 5, caractérisé en ce que l'élément (12) d'espacement comprend un tube (15) ayant un diamètre correspondant au diamètre de la colonne (7) supérieure de pastilles et un certain nombre de pastilles (14) de combustible entourées par le tube.
